# EUROPEAN PATENT APPLICATION

(11) **EP 4 478 214 A1**
(43) Date of publication of application: **18.12.2024**
(21) Application number: 23203191.4
(22) Date of filing: 12.10.2023
(51) Int. Cl.: G06F 16/48

(54) **SEMANTIC ANNOTATION AND FRAMEWORK IN A STORAGE API**

(30) Priority: 12.06.2023 US 202318208578
(71) Applicant: Google LLC, Mountain View, CA 94043 (US)
(72) Inventor: WU, Xiao, Mountain View, 94043 (US); MAO, Zhongjie, Mountain View, 94043 (US); DUDLEY, Elbridge, Mountain View, 94043 (US); HUA, Wei, Mountain View, 94043 (US); HOU, Yanhan, Mountain View, 94043 (US)
(74) Representative: Betten & Resch

(57) **Abstract**

A system and mechanism for performing semantic searching of unstructured data such as, for example, audio, images, and video. The system processes raw input data (e.g., presentation data) to determine data patterns and organizes a semantic space around those data patterns. Queries are then processed to determine data patterns in the semantic space they may be associated with and used in searching the semantic space.

## Description

### BACKGROUND

Generation, sharing, processing, and/or storage of audio, video, and/or image content has seen unprecedented growth, in large part due to ubiquitous availability and use of smartphones. An important function accompanying this growth is the ability to search and retrieve relevant audio, videos, or images in response to a search query. The potential applications span the gamut, *e.g.*, from finding cat videos (fun), medical images (diagnosis), a particular vehicle (crime), or more generally finding objects in a video or image stream.

Searching a database housing audio, video, and image content (*e.g*., searching a media warehouse) presents certain challenges. For example, ambiguities may exist in the data that is going to be indexed or used for building search queries (*i.e.,* presentation data). The data may come from user inputs into the database (*e.g*., user generated annotations (UGAs), search queries or requests (*e.g*., search criteria, search operator, raw text query, etc.) or may result from processing user-inputted data into the database (*e.g*., machine learning (ML) annotations, etc.). The data, and in particular data directly inputted by users, may contain ambiguities that introduce misalignment between indexing and searching data spaces. This misalignment may cause unexpected search results.

### SUMMARY

Aspects of the disclosed technology comprise a system, process or method, or non-transitory computer readable media. According to an aspect, the disclosed technology takes the form of a system comprising a memory element storing instructions; and a processing element coupled to the memory element and configured using the instructions to: convert annotations relating to unstructured data to semantic data; index the semantic data in a semantic space to produce indexed semantic data; receive a search request; and build a semantic query based on the search request by converting the search request to semantic data based on the indexed semantic data.

In accordance with this aspect of the disclosed technology, the unstructured data comprises video data, image data, or audio data. Further in accordance with this aspect of the disclosed technology, the annotations comprise user generated annotations or machine learning generated annotations.

In accordance with this aspect of the disclosed technology, the annotations comprise presentation data. Further, the processing element is configured using the instructions to implement a library function that takes the presentation data as input and identifies presentation data patterns from among the presentation data that is inputted. Further still, the library function may extract identified presentation data patterns mapped to one or more semantic spaces. Further still, the library function may build the semantic query using the one or more semantic spaces. Moreover, the indexed data is associated with the one or more semantic spaces. In addition, the semantic spaces are organized using the identified presentation data patterns as keys. Furthermore, the processing element is associated with a semantic space inference hub that integrates two or more inference strategies. Further still, the semantic inference hub generates a mapping between the identified presentation data patterns and the one or more semantic spaces.

According to another aspect, the disclosed technology takes the form of a system for processing queries semantically comprising a memory element storing instructions; and one or more processing devices coupled to the memory element and configured using the instructions to: receive presentation data; convert the presentation data to one or more presentation pattern data; index the one or more presentation pattern data for a key-value semantic space using the one or more presentation data patterns as a key that is associated with a data value to produce key-value semantic data; receive a search query; process the search query into a semantic search query by comparing a semantic search presentation data pattern with at least one of the one or more presentation data patterns associated with the key-value semantic data; search for records that indicate a match between the semantic search presentation data pattern and the at least one of the one or more presentation data patterns associated with the key-value semantic data to produce search results; and provide the search results to a user.

In accordance with this aspect of the disclosed technology, the one or more processing devices are configured to implement a semantic search strategy engine that implements one or more inference strategies that determine how the presentation data and the search presentation data should be interpreted and outputs the one or more presentation data patterns and the semantic search presentation data pattern. Further in accordance with this aspect of the disclosed technology, the semantic search strategy engine comprises a semantic servant library that takes presentation data as input, identifies configured data patterns among input presentation data based on these data pattern's inferred strategy and extracts identified data patterns. Further still, the semantic servant library constructs the key-value semantic data as a presentation data pattern, semantic space tuple.

Further in accordance with this aspect of the disclosed technology, the semantic search strategy engine may be coupled to a semantic space inference interface that processes the one or more presentation data patterns and the semantic search presentation data pattern to identify semantics associated respectively with the one or more presentation data patterns and the semantic search presentation data pattern. Further still, the semantic space inference interface may be coupled to semantic space inference hub that validates the one or more presentation data patterns and provides validated ones of the one or more presentation data patterns as key-value semantic data for storage in a database.

Further in accordance with this aspect of the disclosed technology, the presentation data comprises user generated annotations (UGAs) or machine learning annotations (MLAs). Further still, the UGAs and MLAs are associated with either audio, image or video content.

According to another aspect, the disclosed technology takes the form of a method for processing queries semantically comprising receiving, at one or more processing devices, presentation data; converting, using the one or more processing devices, the presentation data to one or more presentation pattern data; indexing, using the one or more processing devices, the one or more presentation pattern data for a key-value semantic space using the one or more presentation data patterns as a key that is associated with a data value to produce key-value semantic data; receiving a search query; processing, using the one or more processing devices, the search query into a semantic search query by comparing a semantic search presentation data pattern with at least one of the one or more presentation data patterns associated with the key-value semantic data; searching, using the one or more processing devices, for records that indicate a match between the semantic search presentation data pattern and the at least one of the one or more presentation data patterns associated with the key-value semantic data to produce search results; and providing, using the one or more processing devices, the search results to a user.

### BRIEF DESCRIPTION OF THE DRAWINGS

Figure 1 illustrates an example process in accordance with an aspect of the disclosed technology.
Figure 2 illustrates a functional block diagram of an example system in accordance with an aspect of the disclosed technology.
Figure 3 illustratively depicts an example of a semantic space infrastructure in accordance with an aspect of the disclosed technology.
Figure 4 illustratively depicts an example of a semantic serving infrastructure in the indexing pipeline in accordance with an aspect of the disclosed technology.
Figure 5 illustratively depicts an example of a semantic serving infrastructure in the searching pipeline in accordance with an aspect of the disclosed technology.
Figure 6 illustratively depicts an example of a semantic servant library in accordance with an aspect of the disclosed technology.
Figure 7 illustratively depicts an example computing device in accordance with an aspect of the disclosed technology.
Figure 8 illustratively depicts an example computing system in accordance with an aspect of the disclosed technology.

### DETAILED DESCRIPTION

The disclosed technology may take the form of systems (*e.g*., infrastructure architecture) and processes (*e.g*., data flows, methods) that provide semantic based indexing and querying of media-centric databases, such as a media warehouse. The disclosed technology may resolve meaning ambiguities resulting from user inputs into a media warehouse (*e.g*., UGA, search query) and indexing/searching spaces misalignment based on semantic differences. In one example, there is provided a system and mechanism for performing semantic searching of unstructured data such as, for example, audio, images, and video. The system processes raw input data (*e.g*., presentation data) to determine data patterns and organizes a semantic space around those data patterns. Queries are then processed to determine data patterns in the semantic space they may be associated with and used in searching the semantic space.

In one example, the technology is directed to infrastructure for a semantic space inference subsystem and semantic serving subsystem. The semantic space inference subsystem implements semantic inference strategies to build mappings between patterns within presentation data (*e.g*., presentation data pattern) and a semantic space. Such strategies generally answer the question of what semantic space should be applied to a given type of presentation data. For example, each semantic space inference strategy answers the questions of, when provided with presentation data having a specific pattern, how should that presentation data be interpreted (semantic conversion methodology), how should that data be indexed (indexing methodology), and how should that data be used to build search queries (searching methodology). Semantics conversion methodologies include both direct mapping conversion from user inputs to semantics and machine learning (ML) model inference. Indexing technology builds a search document from semantic data and sends it to an indexing backend.

In another example, the technology is directed to searching methodologies. The searching methodologies generally include query understanding/query rewrite, followed by ranking/retrieval, followed by twiddling/post filtering; twiddling is generally a process for filtering/aggregating search results. In further detail, the searching methodologies will typically include multi-modal search request validation, which may include checking input filters, query text and image bytes. It may also include semantic inference, which can include converting user-provided query data to semantic representation (in this process, we may generate embeddings, rewrite the query with synonyms, or generate some ranking expression). In addition, a search backend selection feature may also be implemented. This feature, depending on the query semantics, may cause issuance of requests to one or several different search backends. Further, the search methodologies may also cause retrieval of information from all necessary backend. The semantic serving subsystem infrastructure includes a semantic serving infrastructure in the indexing pipeline and semantic serving infrastructure in the searching pipeline.

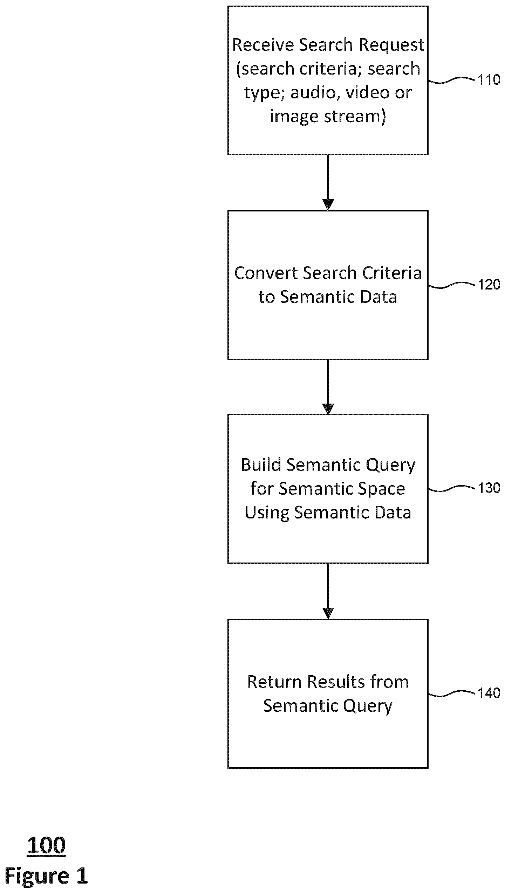

Figure 1 illustrates a process 100 in accordance with an aspect of the disclosed technology. In process 100, a search request is processed so that it is mapped to a semantic space and the search is carried out so that semantically relevant information is returned as part of the search results. The processing may be carried out using a semantic space inference infrastructure and a semantic space serving infrastructure. As part of the process, the initial search request is transformed into a semantic search query that is then run against a database that is indexed in line with the semantics used in formulating the semantic search query. The indexing takes presentation data (*e.g*., UGAs, MLAs) and maps them to a semantic space. The semantic space is then accessed in responding to the search request.

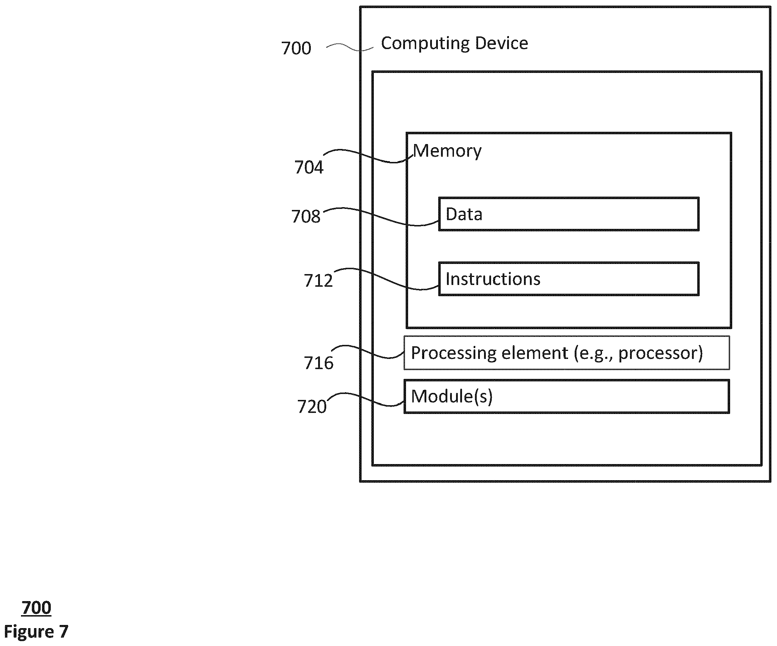

Specifically, at step 110, a search request is received from a user or searcher on a user interface of a computing device, e.g. computing device 700 as illustrated in Fig. 7 and described below. The search request may include parameters such as a search criteria, search type and identify one or more audio, image, or video streams that are relevant to the search. The search criteria may include presentation data and be used for building search queries. In accordance with aspects of the disclosed technology, presentation data includes media warehouse data that will be indexed or used for building search queries. As indicated above, this data may include ambiguities that introduce misalignment between indexing and searching results. Presentation data pattern includes a pattern inside the presentation data. Examples of presentation data patterns may include UGAs of different value types (*e.g*., string, integer, or customized types). UGAs may be identified as different patterns by their UGA keys. A pattern can be defined if a specific term appears in the UGA value. A pattern can also be defined if interpreting a specific UGA requires another UGA's value.

The data schema in the warehouse also includes the search strategy. The search strategy can be used to specify the type of search to run against a given field, including no search, an exact search, or a smart search. If the field is of a complex type (*e.g*., customized structure), the user may further specify what field(s) in the complex type should be used for the search. Where the field is for unstructured data (*e.g*., images or videos), the unstructured data may be annotated by identifying which objects should be extracted from the images/videos. Users or searchers, however, need not annotate what objects are in their images/videos. In accordance with an aspect of the disclosed technology, objects are extracted based on the field annotations, and users may search against extracted objects. Further, users do not need to write code to customize their search capability. Another parameter of the search criteria is data that identifies the search target, *e.g.,* audio, image, or video streams.

At step 120, the search criteria is converted to semantic data. Semantics include information inferred and interpreted from presentation data. Semantics includes semantic data and semantic space. Generally, semantic data comprises canonical data representing presentation data (*e.g*., presentation data that has clear meaning). In order to understand presentation data, a meaning or interpretation "space" associated with the presentation data is identified so that both an indexing pipeline and a searching pipeline can be aligned. Such space is referred to herein as a semantic space. A semantic space specifies the methodologies or instructions for: interpreting and converting presentation data to canonical semantic data; indexing the semantic data; and building a search query with the semantic data. Converting presentation data to semantic data resolves ambiguities embedded inside presentation data and aligns indexing and searching spaces. Semantic data generally takes the form of canonical values in semantic spaces for presentation data. More specifically, given an item of presentation data, once its semantic space is identified, presentation data corresponding to semantic data can be extracted by applying the semantic data conversion methodology in the semantic space on the presentation data.

At step 130, the semantic data generated at step 120 is used to build a semantic query. The semantic query is then used to search the semantic space. In this way, the searcher's intent and query context based on the original search criteria is used to perform the search. At step 140, the result(s) of the semantic search is(are) returned to the searcher on the user interface of the computing device.

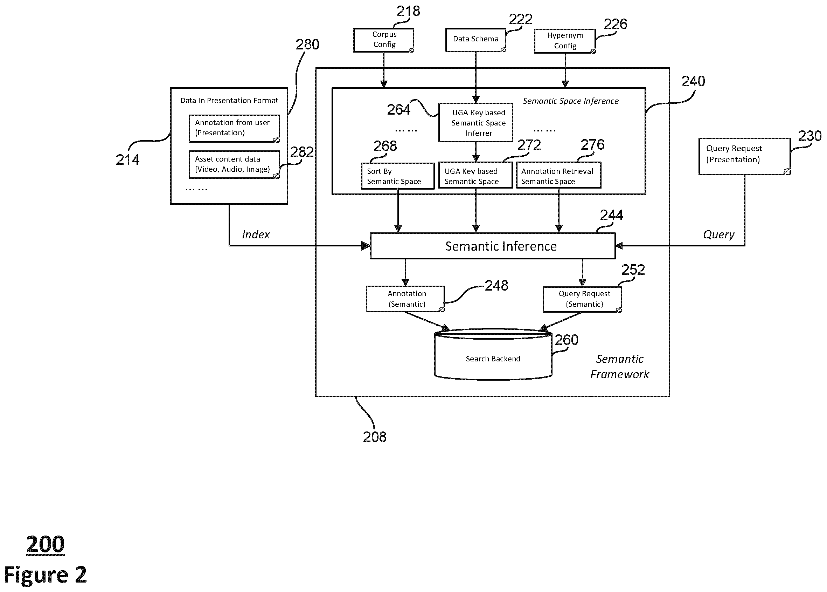

Turning to Figure 2, there is illustrated a functional block diagram of a system 200 in accordance with an aspect of the disclosed technology. The system 200 depicts the semantic framework or semantic infrastructure 208, which includes a data input block 214, a corpus configuration block 218, a data schema block 222, a hypernym configuration block 226, and a query presentation block 230. The semantic infrastructure 208 includes a semantic space inference engine 240, a semantic inference hub 244, an annotation block 248, a query request block 252, and a search backend or database 260.

As shown in Figure 2, the semantic space inference engine 240 includes a UGA key-based semantic space inferrer component 264, a sort by semantic space component 268, a UGA key-based semantic space 272, and an annotation space retrieval component 276. The UGA key-based semantic space inferrer component 264 uses presentation data patterns for a UGA key-based strategy. For example, UGA keys include presentation data patterns. The UGA key-based semantic space inferrer component 264 infers the UGA key based on the data pattern in the presentation data. Each UGA key, as a presentation data pattern, therefore maps to a semantic space.

The UGA key-based semantic space inferrer component 264 is coupled to the UGA key-based semantic space 272. The UGA key-based semantic space 272 includes a semantic space defined by the UGA keys. When the UGA key-based semantic space inferrer component 264 infers one or more UGA keys, those UGA keys are fed to the UGA key-based semantic space 272. UGA key-based semantic space may include five types of information:
**metadata:** information about the semantic space
**DataConfig:** the configuration to convert presentation data to semantic data and to build and parse semantic data
**IndexingConfig:** the configuration to index the generated semantic
**SearchConfig:** the configuration to adopt a given semantic in building search queries
**inference_confidence_score:** the confidence score of a given space inference

As an example, semantic data associated with semantic space 272 may comprise or take the following form:

```
                  metadata {
                    corpus { ...}
                    name: "video_title"
                    semantic_inference_strategy { type: UGA_KEY_BASED
                    semantic_granularity: ASSET_LEVEL
                  }
                  data_config {semantic_data_schema { data_type: STRING } }
                  indexing_config {
                    st_field_spec_config { name: "attr_" name_is_prefix: true
                  }
                  search config { match_options: SMART MATCH}
```

Sort By Semantic Space component 268 and Annotation Retrieval Semantic Space component 276 include two semantic inference strategies applied in two scenarios. These strategies are installed in the semantic framework 208. Sort By Semantic Space component 268 can be used to understand how users would like search results sorted. Annotation Retrieval Semantic Space component 276 can be used to understand how users desire retrieval be performed based on their input annotation data.

As also shown in Figure 2, the corpus configuration block 218 is coupled to the semantic space inference engine 240. The corpus configuration, for example, may include or take the form of:

```
                  name: "NFL Videos"
                  type: VIDEO_ON_DEMAND
                  default_sorting {
                    field_name: "event_date"
                  }
```

The data schema block 222 includes a presentation space data schema that can be used to explain a UGA value structure. The data schema, for example, may include or take the form of:

```
                  key: "video_title"
                  schema details {
                    type: STRING
                       search_strategy {
                      search_strategy_type: SMART_SEARCH
                  }
                  ...
```

The hypernym configuration block 226 associates semantic relations between a term belonging in a set that is defined by one or more other terms. The hypernym, for example, may include or take the form of:

```
                  hypernym {
                  term: "Touchdown"
                  hyponyms: "Score"
                  hyponyms: "Pick Six"
                  }
```

Data input block 214 includes user generated annotations (UGAs) that are provided as presentation data that are then indexed before being stored in the semantic space. The input data will typically include an annotation from a user 280 and asset content data 282. As an example, the user annotation 280 may take the form of:

```
                  key: "video_title"
                  value {
                    str_value: "2023 Super Bowl"
                  }
```

The asset content data 282 may include the type of content that is being indexed, e.g., video, audio, or image.

The annotation or UGA 280 includes presentation data and is inputted or received at semantic inference hub 244. The semantic inference hub 244 may operate on the UGA 280 by evaluating whether the given presentation data pattern matches up with any pre-configured presentation data patterns (*e.g*., PresentationDataPatterns). If there is a match, the UGA 280 is then mapped to the semantic space, as shown at annotation block 248, and then provided to backend 260. This process may include the indexing process.

A user query or search request 230 is provided as presentation data to semantic inference hub 244. The semantic inference hub operates on the request 230 by converting it to a semantic query request 252, which is then used to search the backend or database 260. For example, let's assume a searcher or user issues the following raw query: NY Giants Touchdown. Such a query would be considered presentation data that could be converted to the following semantic query:
[**1**] ((NY OR New York) AND Giants) AND (Touchdown OR TD or Score or Pick Six)
   OR
[**2**] (/m/123 <NY Giants entity id> AND /m/456 <Touchdown entity id>)
   OR
[**3**] {x, y, z}

Semantic search query [**1**] includes a synonym/hypernym expansion. Semantic search query **[2]** includes an entity generation-type query, while semantic search query **[3]** includes a text to embedding query.

In accordance with the system 200, UGAs are mapped to a semantic space that is then used in performing semantic queries derived from raw query requests. Because the UGAs are indexed to a semantic space that is used for searching, and the raw search query is also converted to a semantic request that is aligned to the semantic space, the risk of misalignment is mitigated. In accordance with an aspect of the disclosed technology, the system is applied to unstructured data, such as video, images, or audio, and generally improves the performance of semantic searches performed on such unstructured data.

As previously mentioned, the infrastructure of the disclosed technology may include a semantic space inference infrastructure and a semantic serving infrastructure. With regard to Figure 2, the semantic space inference infrastructure may include the semantic space inference engine 240 and portions of the semantic inference hub 244. The semantic serving infrastructure may include portions of the semantic inference hub 244, annotation block 248, query request block 252, and search backend 260.

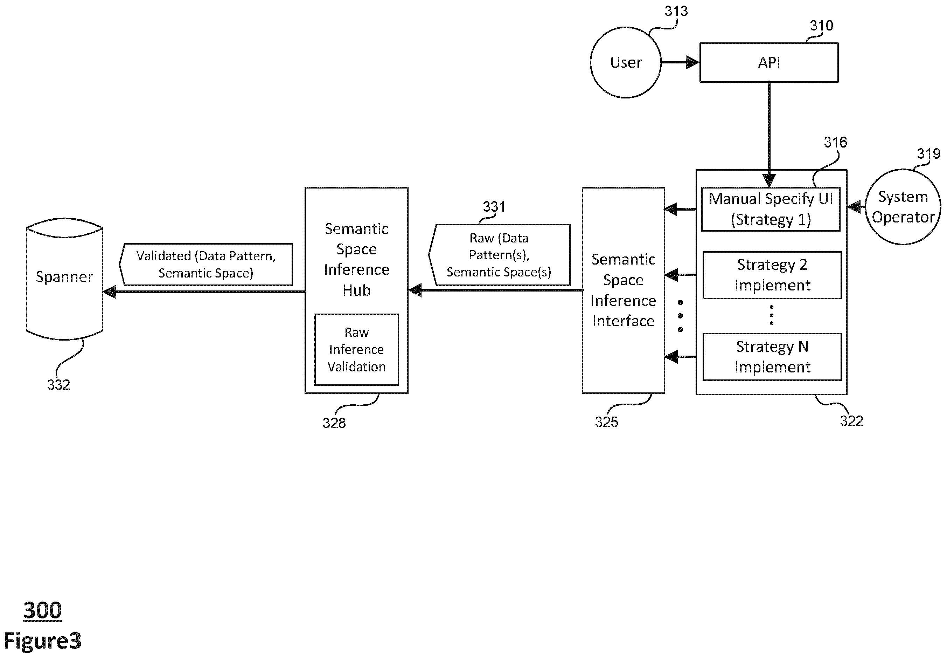

In this regard, Figure 3 illustratively depicts an example of a semantic space inference infrastructure 300 in accordance with an aspect of the disclosed technology. In this example, infrastructure 300 includes an application programming interface (API) server 310 for receiving user input via user interface 313. API 310 facilitates input of presentation data by users/searchers for indexing and as part of a query request. API 310 provides its output to manual specify user interface 316. User interface 316 is also configured to receive input from a system operator interface 319. As shown, user interface 316 employs an inference strategy engine 322 (e.g., strategy 1 through strategy N) that is used to determine how the presentation data that is received, either via API 310 or system operator interface 319, should be interpreted, indexed, and used for building search queries.

The output of strategy engine 322 is provided to semantic space inference interface 325. Semantic interface 325 processes the data it receives and outputs it as data 331 to semantic space inference hub 328. As shown, that output 331 includes the data pattern(s) determined from the raw presentation data and the semantic space(s) that apply to the presentation data. In some instances, presentation data may be interpreted as associated with more than one data pattern and such data patterns may be associated with more than one semantic space. The semantic inference hub 328 integrates all inference strategies, and installs inference strategy per configuration. When configured to work offline, the semantic inference hub 328 runs as a binary that triggers all installed inference strategies to generate <**PresentationDataPattern, SemanticSpace**> mapping, validates the results from each installed strategy, aggregates validated results, and stores them into a Spanner database. The semantic space inference hub 328 validates the output 331 and outputs the validated data to a backend database 332 such as, for example, Spanner. In validating output 331, semantic space inference hub 328 checks the data pattern(s) and semantic space(s) identified in output 331 to ensure that corresponding data pattern(s) and semantic space(s) exist in the database 332.

The semantic serving infrastructure operates in transitioning presentation data into semantics by applying the pre-inferred presentation data pattern to semantic space mapping. The semantic serving infrastructure may be configured so as to have two parts: a semantic serving infrastructure in the indexing pipeline and a semantic serving infrastructure in the searching pipeline.

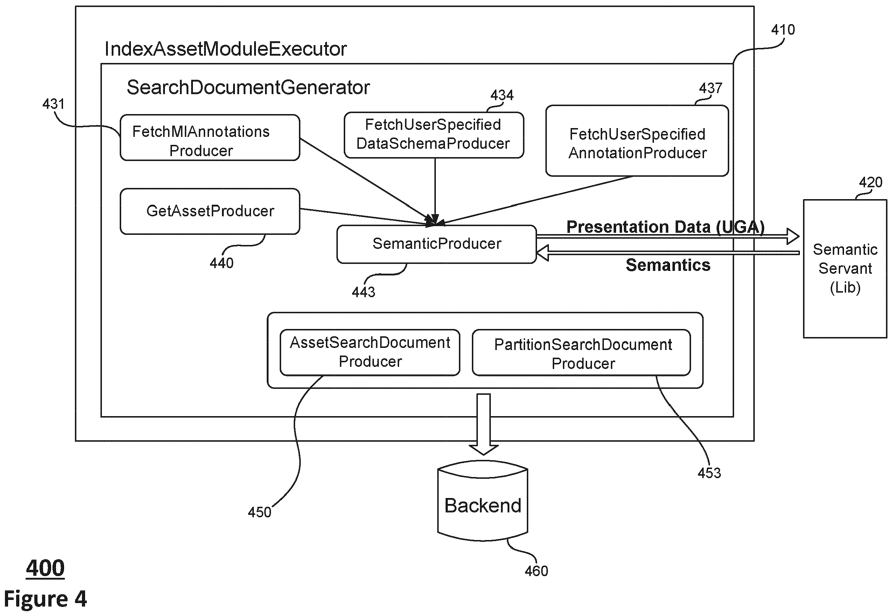

An example of a semantic serving infrastructure in the indexing pipeline 400 is illustrated in Figure 4. The infrastructure in this example includes an index asset module executor 410 communicating with a semantic servant library 420. The executor 410 includes a FetchMIAnnotationsProducer component 431, a FetchUserSpecifiedDataSchemaProducer component 434, a FetchUserSpecifiedAnnotationProducer component 437, and a GetAssetProducer component 440, all of which are coupled to or form a SemanticProducer component 443. The SemanticProducer component 443 uses components 431, 434, 437, and 440 to obtain presentation data that it sends to semantic library 420. Semantic library 420 determines the semantics associated with presentation data and returns the semantics to the SemanticProducer component 443.

The executor 410 also includes an AssetSearchDocumentProducer component 450 and a PartitionSearchDocumentProducer component 453. These components (450, 453) provide output to backend database 460.

Figure 4 shows how semantic inference occurs in an indexing pipeline. The SemanticProducer component 443 functions to generate semantic and/or converts data that is already semantic clear to the semantic form in the system, which can be treated in a unified way. GetAssetProducer 440, FetchMlAnnotationProducer 431, FetchUserSpecifiedDataSchemaProducer 434, and FetchUserSpecifiedAnnotationProducer 437 are for fetching data for semantic conversion. AssetSearchDocumentProducer 450 and PartitionSearchDocumentProducer 453 are used to build semantic data into search documents for retrieval in the query pipeline. SemanticServant 420 transforms semantic data.

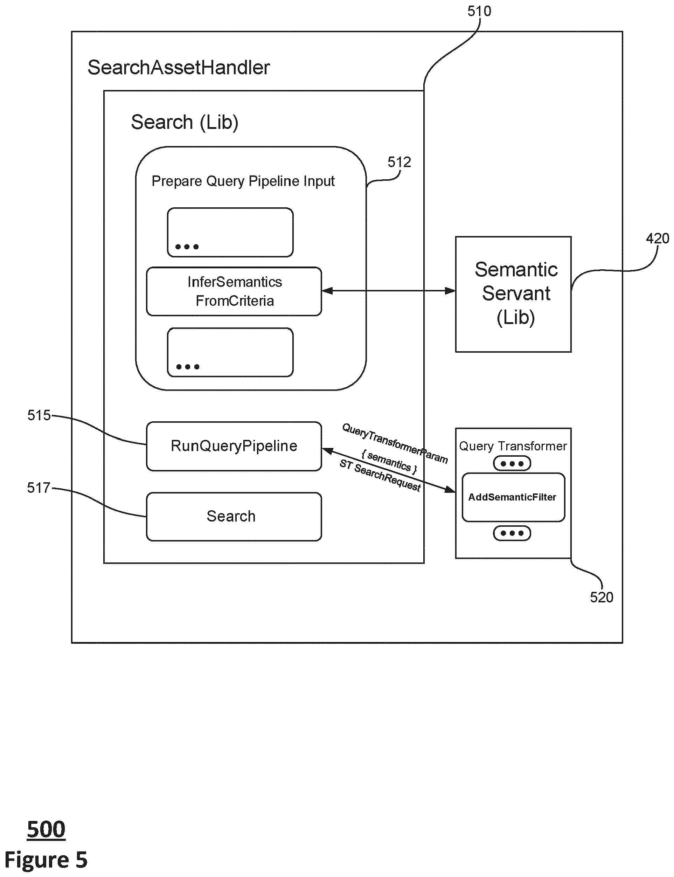

Turning now to Figure 5, there is shown an example of a semantic serving infrastructure in searching pipeline 500. The infrastructure in this example includes a search asset handler 510 that communicates with the semantic servant library 420 and a query transformer 520. The search asset handler 510 includes a prepare query pipeline input component 512, a RunQueryPipeline component 515 and a search component 517. Figure 5 shows processing associated with how semantic inference occurs in the query pipeline. In this regard, component 510 includes an internal library to accept a client search request, and generate results. Component 512 includes pre-retrieval functionality such as validation, plus semantic inference to generate executable backend search request clauses (component 420). Component 515 includes a wrapping component that is responsible for combining the semantic data into one search request. Component 520 includes smaller modules to assist with different areas of 515. Component 517 includes a module responsible for issuing search backend requests, and processing results.

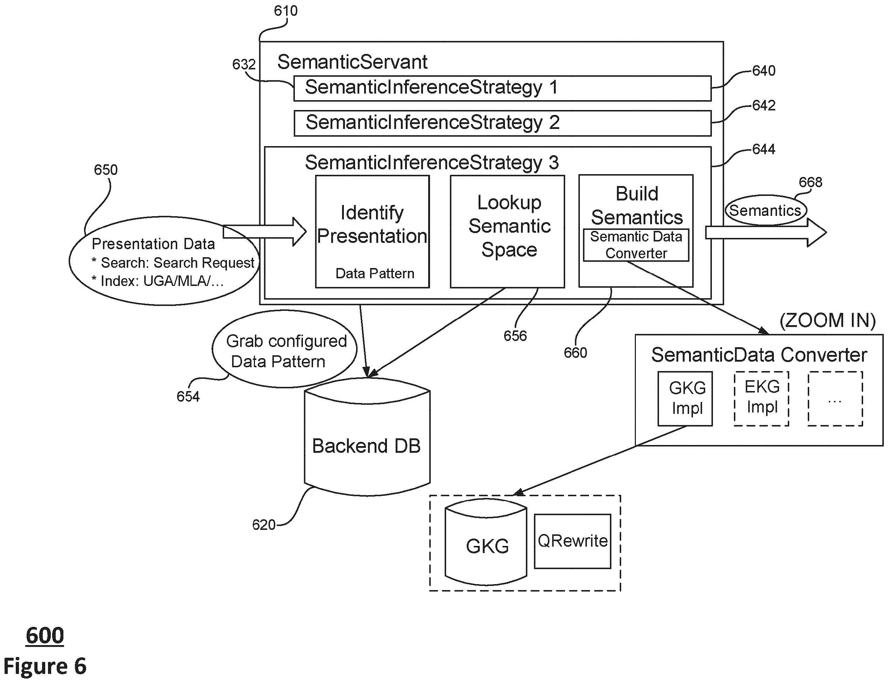

The foregoing modules may take the form of object code, software, subroutines or, more generally, instructions that implement the functionality of each component by causing a processing element to operate in accordance with a given set of instructions. The foregoing modules may take the form of standalone modules or be combined as desired. In addition, each of the foregoing components may be implemented as one or more modules. Figure 6 illustratively depicts an example of a system 600 that includes semantic servant library 610 in accordance with an aspect of the disclosed technology. As shown, the system 600 also includes a backend database 620, *e.g.*, Spanner. Semantic servant library 610 takes presentation data as input, identifies configured data patterns among input presentation data (based on these data pattern's inferred strategy), extracts identified data patterns and maps them to semantic spaces, and uses the methodologies/configurations specified in the semantic spaces to construct semantics out of the presentation data. Since there could be multiple semantic space inference strategies to build <***data pattern, semantic space***> mapping, in the semantic serving pipeline, the way to identify the existence of a data pattern among presentation data and to extract mapped semantic spaces also varies among different semantic space inference strategies. In other words, each semantic space inference strategy has its corresponding semantic inference strategy served in the semantic serving infrastructure to identify presentation data pattern existence, and use the mapped semantic space to build semantics from presentation data. As shown in Figures 4 and 5, a semantic servant library 420 (or 610) is used in both the indexing and searching pipelines to infer semantics from the presentation data. This design allows for a plugin approach, and can be used anywhere that needs to extract semantics from the presentation data.

As shown in Figure 6, semantic servant library 610 takes as input presentation data 650, which may include presentation data associated with a search request or annotation input (*e.g.,* a UGA or machine language annotation (MLA)). Using one or more of the semantic inference strategies, *e.g.*, 640, 642, 644, presentation data patterns are identified based on the presentation data. This is illustrated as being performed at function block or module 652. Function block or module 652 uses the identified patterns to retrieve configured presentation data patterns 654 from backend database 620.

The lookup semantic space function or module 656 then maps the retrieved presentation patterns to one or more semantic spaces by accessing backend database 620. The build semantics function or module 660 constructs semantics associated with the presentation data using the methodologies/configurations associated with the one or more semantic spaces acquired from accessing backend database 620. As shown, semantics function or module 660 outputs the semantics 668.

Figure 7 depicts an example of computing device 700 that may be used to carry out various aspects of the disclosed technology. For example, the computing device 700 may be used to implement the processes discussed above, including the process depicted in Figure 1, and the various processing associated with the components and modules discussed in Figures 2 through 6.

The computing device 700 can take on a variety of configurations, such as, for example, a controller or microcontroller, a processor, or an ASIC. In some instances, computing device 700 may take the form of a server or host machine that carries out the operations discussed above. In other instances, such operations may be performed by one or more of the computing devices in a data center. The computing device may include memory 704, which includes data 708 and instructions 712, and a processing element 716, as well as other components typically present in computing devices (*e.g*., input/output interfaces for a keyboard, display, etc.; communication ports for connecting to different types of networks).

The memory 704 can store information accessible by the processing element 716, including instructions 712 that can be executed by processing element 716. Memory 704 can also include data 708 that can be retrieved, manipulated, or stored by the processing element 716. The memory 704 may be a type of non-transitory computer-readable medium capable of storing information accessible by the processing element 716, such as a hard drive, solid state drive, tape drive, optical storage, memory card, ROM, RAM, DVD, CD-ROM, write-capable, and read-only memories. The processing element 716 can be a well-known processor or other lesser-known types of processors. Alternatively, the processing element 716 can be a dedicated controller such as an ASIC.

The instructions 712 can be a set of instructions executed directly, such as machine code, or indirectly, such as scripts, by the processor 716. In this regard, the terms "instructions," "steps," and "programs" can be used interchangeably herein. The instructions 712 can be stored in object code format for direct processing by the processor 716, or can be stored in other types of computer language, including scripts or collections of independent source code modules that are interpreted on demand or compiled in advance. For example, the instructions 712 may include instructions to carry out the methods and functions discussed above in relation to generating data quality annotations, metrics, etc.

The data 708 can be retrieved, stored, or modified by the processor 716 in accordance with the instructions 712. For instance, although the system and method are not limited by a particular data structure, the data 708 can be stored in computer registers, in a relational database as a table having a plurality of different fields and records, or in XML documents. The data 708 can also be formatted in a computer-readable format such as, but not limited to, binary values, ASCII, or Unicode. Moreover, the data 708 can include information sufficient to identify relevant information, such as numbers, descriptive text, proprietary codes, pointers, references to data stored in other memories, including other network locations, or information that is used by a function to calculate relevant data.

Figure 7 functionally illustrates the processing element 716 and memory 704 as being within the same block, but the processing element 716 and memory 704 may instead include multiple processors and memories that may or may not be stored within the same physical housing. For example, some of the instructions 712 and data 708 may be stored on a removable CD-ROM and others may be within a read-only computer chip. Some or all of the instructions and data can be stored in a location physically remote from, yet still accessible by, the processing element 716. Similarly, the processing element 716 can include a collection of processors, which may or may not operate in parallel.

The computing device 700 may also include one or more modules 720. Modules 720 may take the form of software modules that include a set of instructions, data, and other components (*e.g*., libraries) used to operate computing device 700 so that it performs specific tasks. For example, the modules may take the form of scripts, programs, or instructions to implement one or more of the functions associated with the modules or components discussed in Figures 2 through 6. The modules 720 may take the form of scripts, programs, or instructions to implement the process flow of Figure 1.

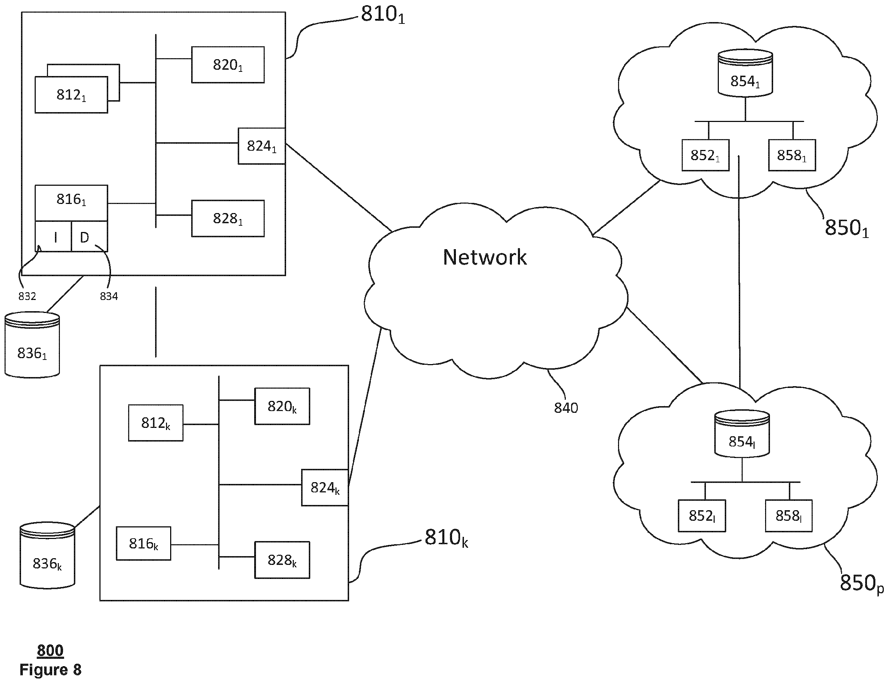

In some examples, the disclosed technology may be implemented as a system 800 in a distributed computing environment as shown in Figure 8. System 800 includes one or more computing devices 810, which may include computing devices 810i through 810ₖ, storage 836, a network 840, and one or more cloud computing systems 850, which may include cloud computing systems 850i through 850ₚ. Computing devices 810 may include computing devices located at a customer location that makes use of cloud computing services such as Infrastructure as a Service (IaaS), Platform as a Service (PaaS), and/or Software as a Service (SaaS). For example, if a computing device 810 is located at a business enterprise, computing device 810 may use cloud systems 850 as a service that provides software applications (*e.g*., accounting, word processing, inventory tracking, etc., applications) to computing devices 810 used in operating enterprise systems. In addition, computing device 810 may access cloud computing systems 850 as part of its operations to perform semantic queries of video, audio, or image data in support of its business enterprise.

Computing device 810 may include a computing device as discussed in relation to Figure 7. For instance, each of computing devices 810 may include one or more processors 812, memory 816 storing data 834 and instructions 832, display 820, communication interface 824, and input system 828. The processors 812 and memories 816 may be communicatively coupled as shown in Figure 8. Computing device 810 may also be coupled or connected to storage 836, which may include local or remote storage, *e.g*., on a Storage Area Network (SAN), that stores data accumulated as part of a customer's operation. Computing device 810 may take the form of a standalone computer (*e.g.*, desktop or laptop) or a server associated with a customer. A given customer may also implement, as part of its business, multiple computing devices as servers. Memory 816 stores information accessible by the one or more processors 812, including instructions 832 and data 834 that may be executed or otherwise used by the processor(s) 812. The memory 816 may be of any type capable of storing information accessible by the processor, including a computing device-readable medium, or other medium that stores data that may be read with the aid of an electronic device, such as a hard drive, memory card, ROM, RAM, DVD or other optical disks, as well as other write-capable and read-only memories. Systems and methods may include different combinations of the foregoing, whereby different portions of the instructions and data are stored on different types of media.

Computing device 810 may also include a display 820 (*e.g.,* a monitor having a screen, a touch-screen, a projector, a television, or other device that is operable to display information) that provides a user interface that allows for controlling the computing device 810. Such control may include, for example, using a computing device to cause data to be uploaded through input system 828 to cloud system 850 for processing, causing accumulation of data on storage 836, or more generally, managing different aspects of a customer's computing system. While input system 828 may be used to upload data, *e.g.,* a USB port, computing system 800 may also include a mouse, keyboard, touchscreen, or microphone that can be used to receive commands and/or data.

The network 840 may include various configurations and protocols, including short-range communication protocols such as Bluetooth^{™}, Bluetooth LE, the Internet, World Wide Web, intranets, virtual private networks, wide area networks, local networks, private networks using communication protocols proprietary to one or more companies, Ethernet, WiFi, HTTP, etc., and various combinations of the foregoing. Such communication may be facilitated by any device capable of transmitting data to and from other computing devices, such as modems and wireless interfaces. Computing device 810 interfaces with network 840 through communication interface 824, which may include the hardware, drivers, and software necessary to support a given communications protocol.

Cloud computing systems 850 may include one or more data centers that may be linked via high speed communications or computing networks. A given data center within system 850 may include dedicated space within a building that houses computing systems and their associated components, *e.g.*, storage systems and communication systems. Typically, a data center will include racks of communication equipment, servers/hosts, and disks. The servers/hosts and disks include physical computing resources that are used to provide virtual computing resources such as VMs. To the extent that a given cloud computing system includes more than one data center, those data centers may be at different geographic locations within relative close proximity to each other, chosen to deliver services in a timely and economically efficient manner, as well as provide redundancy and maintain high availability. Similarly, different cloud computing systems are typically provided at different geographic locations.

As shown in Figure 8, computing system 850 may be illustrated as comprising infrastructure 852, storage 854, and computer system 858. Infrastructure 852, storage 854, and computer system 858 may include a data center within a cloud computing system 850. Infrastructure 852 may include servers, switches, physical links (*e.g.,* fiber), and other equipment used to interconnect servers within a data center with storage 854 and computer system 858. Storage 854 may include a disk or other storage device that is partitionable to provide physical or virtual storage to virtual machines running on processing devices within a data center. For instance, storage 854 may include an element of search backend or Spanner as discussed above. Storage 854 may be provided as a SAN within the datacenter hosting the virtual machines supported by storage 854 or in a different data center that does not share a physical location with the virtual machines it supports. Computer system 858 acts as supervisor or managing agent for jobs being processed by a given data center. In general, computer system 858 will contain the instructions necessary to, for example, manage the operations requested as part of a synchronous training operation on customer data. Computer system 858 may receive jobs, for example, as a result of input (*e.g.,* a search request) received via an application programming interface (API) from a user, searcher, or customer.

Aspects of the disclosed technology may be embodied in a method, process, apparatus, or system. Those aspects may include one or more combinations of the following features (*e.g.,* F1 through F20):
F1. A system for processing semantic queries, comprising:
   a memory element storing instructions; and
   a processing element coupled to the memory element and configured using the instructions to:
      convert annotations relating to unstructured data to semantic data;
      index the semantic data in a semantic space to produce indexed semantic data;
      receive a search request; and
      build a semantic query based on the search request by converting the search request to semantic data based on the indexed semantic data.
F2. The system of F1, wherein the unstructured data comprises video data, image data, or audio data.
F3. The system of any one of F1 to F2, wherein the annotations comprise user generated annotations or machine learning generated annotations.
F4. The system of any one of F1 to F3, wherein the annotations comprise presentation data.
F5. The system of any one of F1 to F4, wherein the processing element is configured using the instructions to implement a library function that takes the presentation data as input and identifies presentation data patterns from among the presentation data that is inputted.
F6. The system of any one of F1 to F5, wherein the library function extracts identified presentation data patterns mapped to one or more semantic spaces.
F7. The system of any one of F1 to F6, wherein the library function builds the semantic query using the one or more semantic spaces.
F8. The system of any one of F1 to F7, wherein the indexed data is associated with the one or more semantic spaces.
F9. The system of any one of F1 to F8, wherein the semantic spaces are organized using the identified presentation data patterns as keys.
F10. The system of any one of F1 to F9, wherein the processing element is associated with a semantic space inference hub that integrates two or more inference strategies.
F11. The system of any one of F1 to F10, wherein the semantic inference hub generates a mapping between the identified presentation data patterns and the one or more semantic spaces.
F12. A system for processing queries semantically, comprising:
   a memory element storing instructions; and
   one or more processing devices coupled to the memory element and configured using the instructions to:
      receive presentation data;
      convert the presentation data to one or more presentation pattern data;
      index the one or more presentation pattern data for a key-value semantic space using the one or more presentation data patterns as a key that is associated with a data value to produce key-value semantic data;
      receive a search query;
      process the search query into a semantic search query by comparing a semantic search presentation data pattern with at least one of the one or more presentation data patterns associated with the key-value semantic data;
      search for records that indicate a match between the semantic search presentation data pattern and the at least one of the one or more presentation data patterns associated with the key-value semantic data to produce search results; and
      provide the search results to a user.
F13. The system of F12, wherein the one or more processing devices are configured to implement a semantic search strategy engine that implements one or more inference strategies that determine how the presentation data and the search presentation data should be interpreted and outputs the one or more presentation data patterns and the semantic search presentation data pattern.
F14. The system of any one of F12 to F13, wherein the semantic search strategy engine comprises a semantic servant library that takes presentation data as input, identifies configured data patterns among input presentation data based on these data pattern's inferred strategy and extracts identified data patterns.
F15. The system of any one of F12 to F14, wherein the semantic servant library constructs the key-value semantic data as a presentation data pattern, semantic space tuple.
F16. The system of any one of F12 to F15, wherein the semantic search strategy engine is coupled to a semantic space inference interface that processes the one or more presentation data patterns and the semantic search presentation data pattern to identify semantics associated respectively with the one or more presentation data patterns and the semantic search presentation data pattern.
F17. The system of any one of F12 to F16, wherein the semantic space inference interface is coupled to semantic space inference hub that validates the one or more presentation data patterns and provides validated ones of the one or more presentation data patterns as key-value semantic data for storage in a database.
F18. The system of any one of F12 to F17, wherein the presentation data comprises user generated annotations (UGAs) or machine learning annotations (MLAs).
F19. The system of any one of F12 to F18, wherein the UGAs and MLAs are associated with either audio, image or video content.
F20. A method for processing queries semantically, comprising:
   receiving, at one or more processing devices, presentation data;
   converting, using the one or more processing devices, the presentation data to one or more presentation pattern data;
   indexing, using the one or more processing devices, the one or more presentation pattern data for a key-value semantic space using the one or more presentation data patterns as a key that is associated with a data value to produce key-value semantic data;
   receiving a search query;
   processing, using the one or more processing devices, the search query into a semantic search query by comparing a semantic search presentation data pattern with at least one of the one or more presentation data patterns associated with the key-value semantic data;
   searching, using the one or more processing devices, for records that indicate a match between the semantic search presentation data pattern and the at least one of the one or more presentation data patterns associated with the key-value semantic data to produce search results; and
   providing, using the one or more processing devices, the search results to a user.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the present invention as defined by the appended claims.

## Claims

1. A system for processing semantic queries, comprising:
a memory element storing instructions; and
a processing element coupled to the memory element and configured using the instructions to:
convert annotations relating to unstructured data to semantic data;
index the semantic data in a semantic space to produce indexed semantic data;
receive a search request; and
build a semantic query based on the search request by converting the search request to semantic data based on the indexed semantic data.

2. The system of claim 1, wherein the unstructured data comprises video data, image data, or audio data; and/or
wherein the annotations comprise user generated annotations or machine learning generated annotations.

3. The system of claim 1, wherein the annotations comprise presentation data.

4. The system of claim 3, wherein the processing element is configured using the instructions to implement a library function that takes the presentation data as input and identifies presentation data patterns from among the presentation data that is inputted.

5. The system of claim 4, wherein the library function extracts identified presentation data patterns mapped to one or more semantic spaces.

6. The system of claim 5, wherein the library function builds the semantic query using the one or more semantic spaces.

7. The system of claim 6, wherein the indexed data is associated with the one or more semantic spaces; or wherein the semantic spaces are organized using the identified presentation data patterns as keys.

8. The system of one of claims 5 to 7, wherein the processing element is associated with a semantic space inference hub that integrates two or more inference strategies; and wherein the semantic inference hub optionally generates a mapping between the identified presentation data patterns and the one or more semantic spaces.

9. A system for processing queries semantically, comprising:
a memory element storing instructions; and
one or more processing devices coupled to the memory element and configured using the instructions to:
receive presentation data;
convert the presentation data to one or more presentation pattern data;
index the one or more presentation pattern data for a key-value semantic space using the one or more presentation data patterns as a key that is associated with a data value to produce key-value semantic data;
receive a search query;
process the search query into a semantic search query by comparing a semantic search presentation data pattern with at least one of the one or more presentation data patterns associated with the key-value semantic data;
search for records that indicate a match between the semantic search presentation data pattern and the at least one of the one or more presentation data patterns associated with the key-value semantic data to produce search results; and
provide the search results to a user.

10. The system of claim 9, wherein the one or more processing devices are configured to implement a semantic search strategy engine that implements one or more inference strategies that determine how the presentation data and the search presentation data should be interpreted and outputs the one or more presentation data patterns and the semantic search presentation data pattern.

11. The system of claim 10, wherein the semantic search strategy engine comprises a semantic servant library that takes presentation data as input, identifies configured data patterns among input presentation data based on these data pattern's inferred strategy and extracts identified data patterns; and
wherein the semantic servant library optionally constructs the key-value semantic data as a presentation data pattern, semantic space tuple.

12. The system of claim 10 or 11, wherein the semantic search strategy engine is coupled to a semantic space inference interface that processes the one or more presentation data patterns and the semantic search presentation data pattern to identify semantics associated respectively with the one or more presentation data patterns and the semantic search presentation data pattern.

13. The system of claim 12, wherein the semantic space inference interface is coupled to semantic space inference hub that validates the one or more presentation data patterns and provides validated ones of the one or more presentation data patterns as key-value semantic data for storage in a database.

14. The system of one of claims 9 to 13, wherein the presentation data comprises user generated annotations (UGAs) or machine learning annotations (MLAs); and
wherein the UGAs and MLAs are optionally associated with either audio, image or video content.

15. A method for processing queries semantically, comprising:
receiving, at one or more processing devices, presentation data;
converting, using the one or more processing devices, the presentation data to one or more presentation pattern data;
indexing, using the one or more processing devices, the one or more presentation pattern data for a key-value semantic space using the one or more presentation data patterns as a key that is associated with a data value to produce key-value semantic data;
receiving a search query;
processing, using the one or more processing devices, the search query into a semantic search query by comparing a semantic search presentation data pattern with at least one of the one or more presentation data patterns associated with the key-value semantic data;
searching, using the one or more processing devices, for records that indicate a match between the semantic search presentation data pattern and the at least one of the one or more presentation data patterns associated with the key-value semantic data to produce search results; and
providing, using the one or more processing devices, the search results to a user.
